# EUROPEAN PATENT SPECIFICATION

(11) **EP 1 714 433 B1**
(45) Date of publication and mention of the grant of the patent: **04.12.2013**
(21) Application number: 05704467.9
(22) Date of filing: 07.01.2005
(51) Int. Cl.: H04L 12/413, H04W 74/08

(54) **Wireless communication method for coordination of contention periods for MIMO stations in an environment comprising SISO stations**
Verfahren zur Drahtlosen Kommunikation und Koordination eines Contention Periods für MIMO Stationen in einer Umgebung mit SISO Stationen
Méthode de radiocommunication pour la coordination d'une Contention Period pour des stations MIMO dans un environnement ayant des stations SISO présentes

(30) Priority: 11.02.2004 KR 2004009002
(43) Date of publication of application: 25.10.2006
(73) Proprietor: Samsung Electronics Co., Ltd., Suwon-si, Gyeonggi-do, 443-742 (KR)
(72) Inventor: KWON, Chang-yeul, 328-905 Hanyang APT, Seongnam-si, Gyeonggi-do 463-776 (KR); YANG, Chil-youl, 103-2103 Pureujio APT, Yongin-si, Gyeonggi-do 449-120 (KR); KIM, Tae-kon, 105-1003 Imaechon Geumgang APT, Seongnam-si, Gyeonggi-do 463-796 (KR)
(74) Representative: Walaski, Jan Filip
(86) International application number: PCT/KR2005/000044
(87) International publication number: WO 2005/079012

(56) References cited:
- WO-A2-01/76098
- WO-A2-02/091597
- US-A1- 2002 163 933
- US-A1- 2003 161 268
- US-A1- 2003 169 763
- US-A1- 2003 185 241
- US-A1- 2003 231 715
- US-A1- 2004 002 357
- US-B1- 6 556 173

## Description

### Technical Field

The present invention relates to wireless communications, and more particularly, a wireless communication method used in a wireless infrastructure network where single input single output (SISO) stations and multi input multi output (MIMO) stations coexist, the wireless communication method being capable of preventing collision of frames transmitted from the SISO stations and from the MIMO stations by designating part of a conventional contention free period (CFP) as a contention period where only the MIMO stations can contend with each other for a channel.

### Background Art

A wireless LAN allows stations within a predetermined distance of one another to wirelessly send and receive data to and from one another without the need for floor wiring similar to that of wired LAN. Thus, within the wireless LAN, stations wirelessly communicate with one another so they are free to move from place to place.

In general, the IEEE 802.11 network is built around a Basic Service Set (BSS), which is a group of stations communicating with one another. There are two specific kinds of BSS's: an independent BSS, and an infrastructure BSS.

An access point (AP) in the infrastructure BSS transmits beacon frames. A basic service area is defined as an area, in which the beacon frames are transmitted between members of the infrastructure BSS.

On the other hand, the AP is not used in the independent BSS, which is an IEEE 802.11 ad-hoc network, in which stations directly communicate with one another.

Meanwhile, according to the IEEE 802.11 standard, in order for a station to access a data transmission medium, a Distributed Coordination Function (DCF) and a Point Coordination Function (PCF) are used.

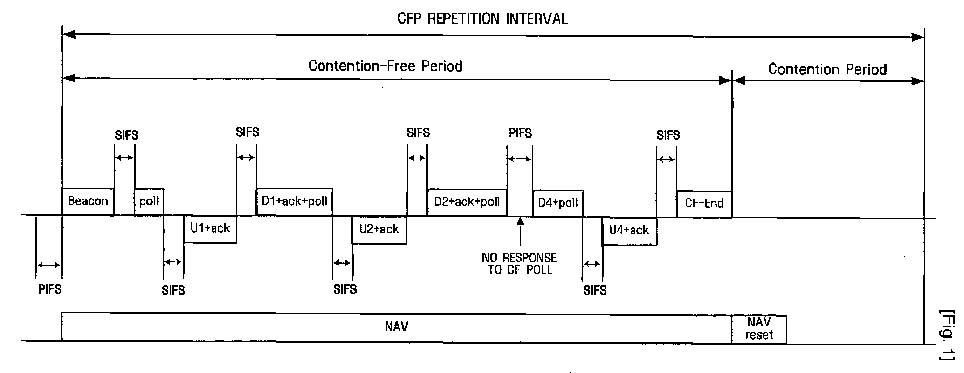

FIG. 1 is a diagram illustrating the transmission of data between stations using a point coordination function (PCF) method. The PCF method is generally used together with a distributed coordination function (DCF) method. In other words, when a PCF section ends, a DCF section begins. A contention-free period (CFP) is comprised of repetitions of the PCF section and the DCF section. Referring to FIG. 1, D1 and D2 are frames transmitted from a point coordinator, and U1 and U2 are frames transmitted from stations polled by the point coordinator.

When the point coordinator transmits a beacon frame, a CFP based on PCF rules begins. The point coordinator, which is located in an access point (AP), polls stations in a round-robin manner to determine whether the stations have data to transmit. Each of the stations polled by the point coordinator transmits data and an acknowledgement (ACK) message to the point coordinator. Then, the point coordinator transmits the data and ACK, which are received from the station polled by the point coordinator, to a destination station and polls the destination station. The destination station polled by the point coordinator transmits an ACK message to the point coordinator. If the destination station has data to transmit, it transmits the data to the point coordinator together with the ACK message. In this manner, data is transmitted between the stations during a CFP.

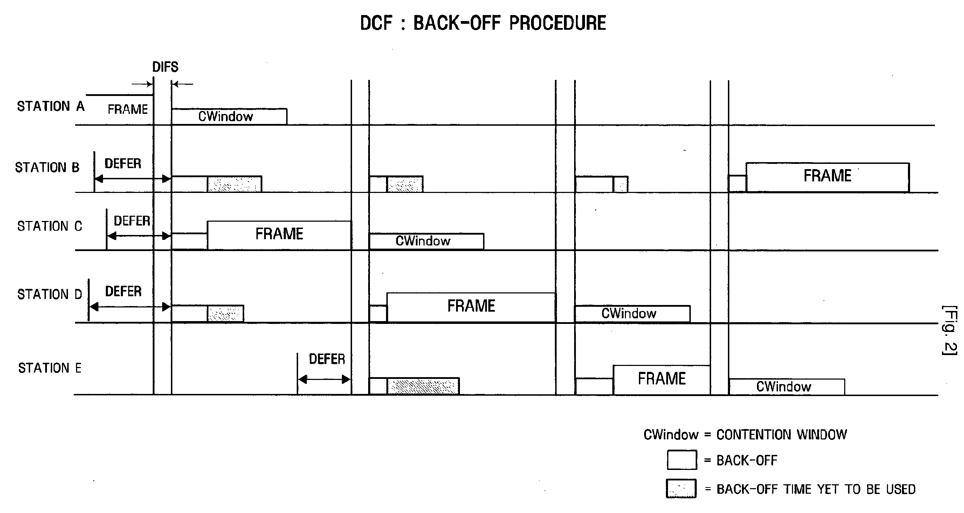

FIG. 2 is a diagram illustrating a DCF-based back-off procedure. A PCF method provides contention-free services, but a DCF method provides contention-based services. A DCF method adopts a rotating back-off window mechanism in order to prevent frames transmitted from stations from colliding with each other. In a DCF method, it is determined whether a predetermined medium is currently being used based on the length of a distributed inter-frame space (DIFS).

Referring to FIG. 2, during a DCF-based CP, a contention window, CWindow, having a predetermined size is allotted to each station after a DIFS period. Random slots (back-off times) having almost the same probability of being selected through a back-off algorithm are respectively allotted to stations that contend with one another for a channel in an independent basic service set (IBSS).

Specifically, when the transmission of a frame from a station A that currently uses the channel is complete, stations B, C, and D contend with one another for the channel in a first contention window period after a DIFS period. In the first contention window period, the station C that has selected a minimum amount of back-off time secures the channel using the back-off algorithm and transmits a frame when its back-off timer reaches 0.

In a second contention window period after another DIFS period, the stations B and D and a station E contend with one another for the channel, and the station D successfully secures the channel using the back-off algorithm and transmits a frame. In a third contention window period, the stations B and E contend with each other for the channel, and the station E successfully secures the channel using the back-off algorithm and transmits a frame. Accordingly, only the station B is left to secure the channel. In a fourth contention window period, the station B secures the channel using the back-off algorithm and transmits a frame.

In accordance with the proliferation and development of digital devices, digital technology has demanded a high-speed wireless local area network (LAN) system that will operate at data rates of 100 Mbits/sec or higher. To meet such demand, multiple input multiple output (MIMO) technology has been introduced as a candidate for one of the most promising technologies for speeding up the next generation wireless LAN systems.

The MIMO technology is classified into a spatial multiplexing technique, which enables higher-speed data transmission by simultaneously transmitting different types of data using multiple transmitting and receiving antennas without the necessity of increasing the bandwidth of an entire system, and a spatial diversity technique, which enables transmission diversity by transmitting one kind of data using multiple transmitting antennas.

US 2003/0169763 discloses a local area network in which OSDM stations and CCK only stations co-exist. A beacon signal having a contention-free period CFP is transmitted from an access point to the plurality of said stations.

Conventional IEEE 802.1 la single input single output (SISO) stations do not recognize frames transmitted from multi input multi output (MIMO) stations. Ac- cordingly, in an infrastructure basic service set (BSS) where conventional IEEE 802. 1 la SISO stations and MIMO stations coexist, the conventional IEEE 802. 1 la SISO stations are likely to contend for a channel currently being occupied by the MIMO stations and attempt to transmit frames, which are highly likely to collide with frames transmitted from the MIMO stations.

The present invention provides a wireless communication method, which enables two different types of stations, i. e. , single input single output (SISO) stations and multi input multi output (MIMO) stations, to coexist in a wireless infrastructure network and which can prevent collisions of frames transmitted from the SISO stations and from the MIMO stations by allotting to the MIMO stations a predetermined amount of time in which only the MIMO stations can contend with each other for a channel.

According to a first aspect of the invention there is provided a wireless communication method as set out in claim 1. According to a second aspect of the invention there is provided a wireless communication method as set out in claim 2. Preferred features of the first and second aspects are set out in claims 3-9.

According to a third aspect of the invention there is provided a point coordinator as set out in claim 9. According to a fourth aspect of the invention there is provided a wireless communication system as set out in claim 10. Preferred features of the fourth aspect are set out in claims 11-17.

The above and other features and advantages of the present invention will become more apparent by describing in detail exemplary embodiments thereof with reference to the attached drawings in which:
FIG. 1 is a diagram illustrating the transmission of data between stations using a PCF method;
FIG. 2 is a diagram illustrating a DCF-based back-off procedure;
FIG. 3 is a diagram illustrating the structure of an IEEE 802.11 management frame ;
FIG. 4 is a diagram illustrating the structure of a frame body of FIG. 3;
FIG. 5 is a table showing various types of element identifications (IDs) recorded in an element ID field of FIG. 4;
FIG. 6 is a diagram illustrating the structure of a MIMO cyclic prefix (CP) parameter set of FIG. 5 ;
FIG. 7 is a diagram illustrating a CFP repetition interval; and
FIG. 8 is a flowchart of a wireless communication method according to an exemplary embodiment of the present invention.

A wireless communication method according to an exemplary embodiment of the present invention will now be described more fully with reference to the accompanying drawings.

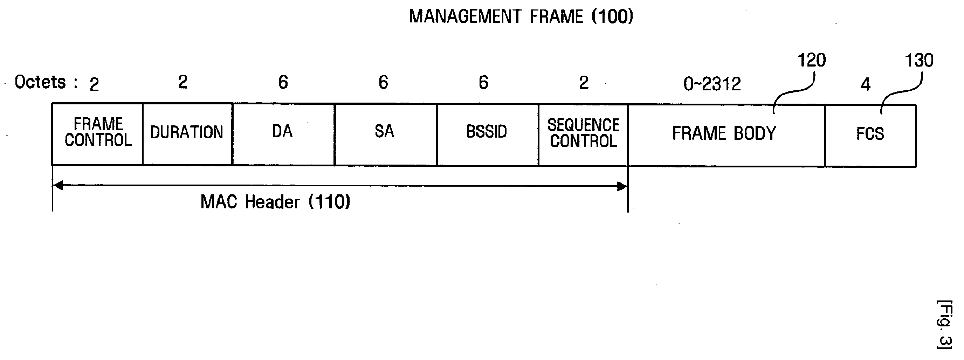

FIG. 3 is a diagram illustrating a management frame 100 based on the IEEE 802.11 standard. The management frame 100 may be a beacon frame, an association request frame, a dissociation frame, an association response frame, a probe request frame, and a probe response frame.

The management frame 100 includes a media access control (MAC) header 110, a frame body 120, and a frame check sequence (FCS) field 130. The MAC header 110 includes a frame control field, a duration field, a destination address field, a source address field, a basic service set identification (ID) field, and a sequence control field.

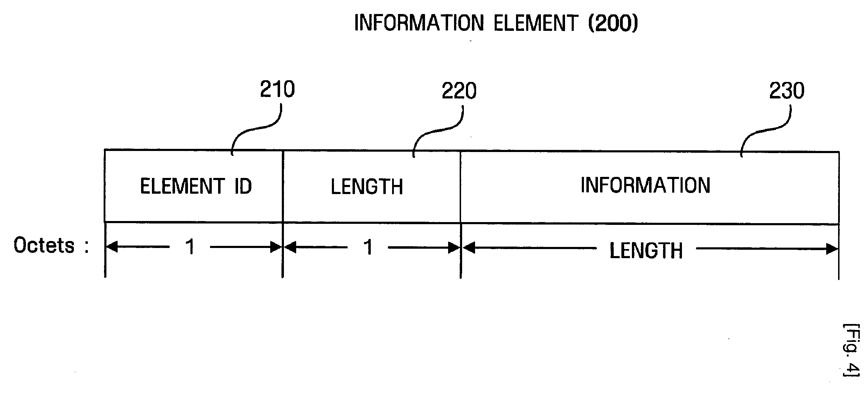

The frame body 120 of the management frame 100 is filled with one or more information elements (IEs) 200, as shown in FIG. 4. Each of the IEs 200 includes an element ID field 210 in which the types of the IE 200 are recorded, an information field 230 in which data to be actually transmitted through the IE 200 is recorded, and a length field 220 in which the size of the information field 230 is recorded.

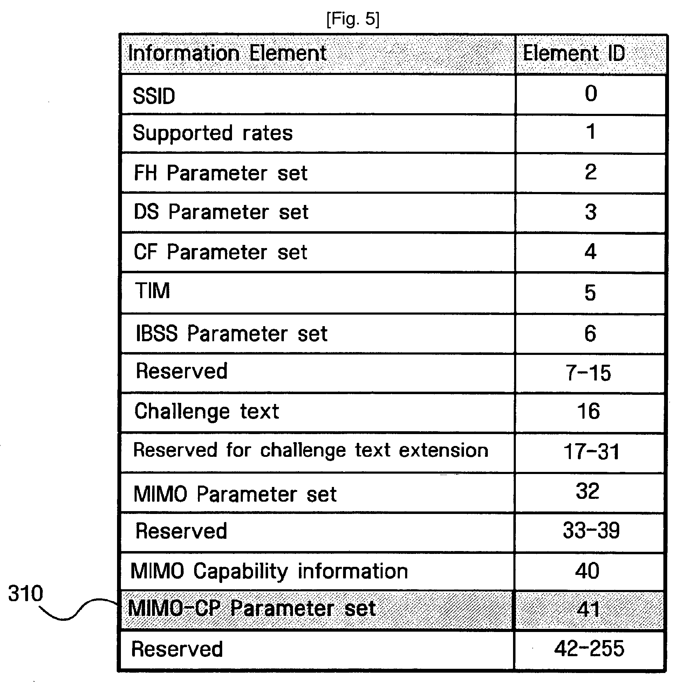

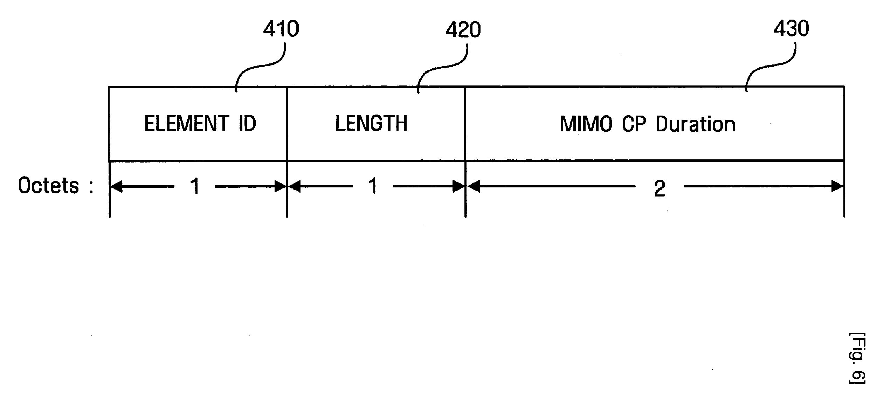

FIG. 5 is a table showing types of element IDs that are recorded in an element ID field 210 of FIG. 4. Referring to FIG. 5, it is possible to determine what information is included in the information element 200 by referring to element IDs recorded in the element ID field 210 of the information element 200. The element ID field 210, unlike a conventional element ID field, includes a MIMO CP parameter set 310 having an element ID of 41. The MIMO CP parameter set 310 may be identified by a number other than 41. The MIMO CP parameter set 310 will be described later in detail with reference to FIG. 6.

FIG. 6 is a diagram illustrating the structure of the MIMO CP parameter set 310 of FIG. 5. Referring to FIG. 6, the MIMO CP parameter set 310 includes an element ID field 410, a length field 420, and a MIMO CP duration field 430.

An element ID of the MIMO CP parameter set 310 is recorded in the Element ID field 410. For example, if the element ID of the MIMO CP parameter set 310 is 41, as shown in FIG. 5, 41 may be recorded in the element ID field 410. The size of the MIMO CP duration field 430 is recorded in the length field 420. The MIMO CP duration field 430 contains information on a MIMO contention period in which MIMO stations contend with each other for a channel. For example, the duration of the MIMO contention period may be recorded in the MIMO CP duration field 430. Therefore, when receiving the MIMO CP parameter set 310 from a point coordinator, MIMO stations interpret information recorded in the MIMO CP duration field 430 and determine when they are able to occupy a channel based on the interpretation. A reserved field (not shown) may be added to the MIMO CP parameter set 310, in which case, additional information on the MIMO CP parameter set 310 may be recorded in the reserved field.

The MIMO CP parameter set 310 is preferably, but not necessarily, included in a beacon frame, which is one type of management frame.

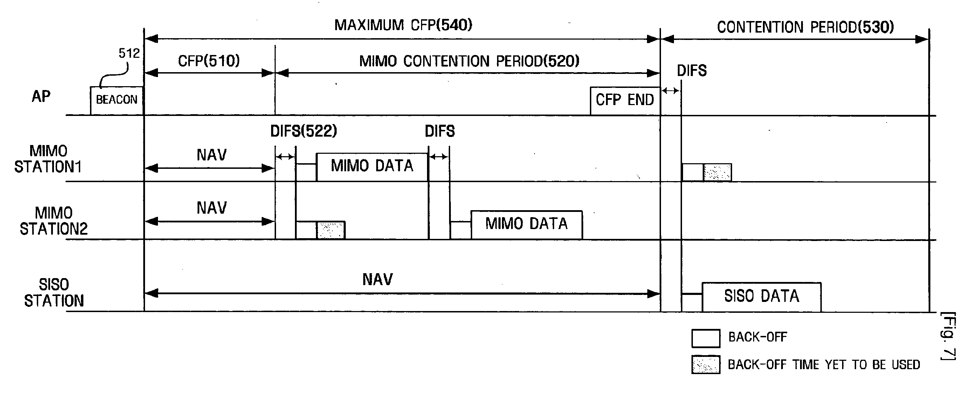

FIG. 7 is a diagram illustrating a CFP repetition interval according to an exemplary embodiment of the present invention.

Referring to FIG. 7, the CFP repetition interval is comprised of a CFP 510, a MIMO contention period 520, and a contention period 530.

Part of a conventional CFP is designated as the MIMO contention period 520. During the CFP 510, stations transmit frames in a predetermined order in a conv entional manner. In other words, the station that is polled first by a point coordinator transmits a frame ahead of the rest of the stations, and the rest of the stations wait until they are polled by the point coordinator.

During the MIMO contention period 520, MIMO stations contend with each other for a channel using the back-off algorithm described above with reference to FIG. 2. The MIMO stations receive a management frame containing a MIMO CP parameter set, which has been described above with reference to FIG. 6, and obtain information on the MIMO contention period 520 by interpreting the MIMO CP parameter set.

However, conventional stations based on the IEEE 802.11a standard, i.e., SISO stations, are not able to interpret the MIMO CP parameter set by themselves. Thus, the SISO stations keep communicating in a PCF manner throughout a maximum CFP 540 including the CFP 510 and the MIMO contention period 520.

If the maximum CFP 540 ends in response to a CFP end frame transmitted by the point coordinator, the contention period 540 begins. During the contention period 540, the SISO stations contend with each other for the channel to transmit SISO data. The MIMO stations may participate in the contention for the channel along with the SISO stations.

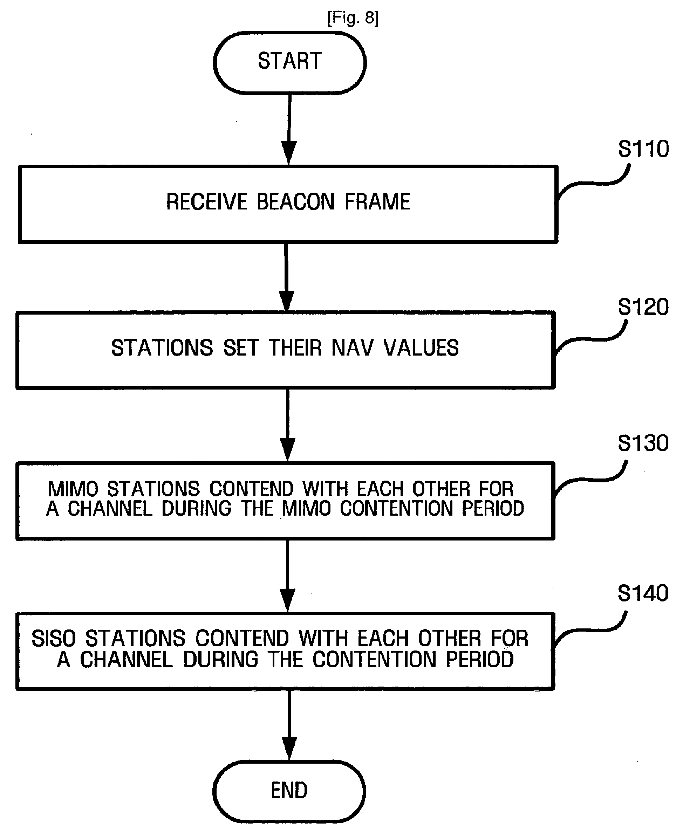

FIG. 8 is a flowchart of a wireless communication method according to an exemplary embodiment of the present invention.

Referring to FIGS. 7 and 8, in operation S110, a point coordinator generates a management frame including information on the MIMO contention period 520 and transmits the management frame to stations in its wireless network. The management frame generated in operation S110 may include information elements, such as a CFP parameter set containing information on the maximum CFP 540 and a MIMO CP parameter set described above with reference to FIG. 6. The management frame generated in operation S110 is preferably, but not necessarily, a beacon frame (512 of FIG. 7) that follows the IEEE 802.11 standard.

In operation S120, each of the stations receives the management frame generated in operation S110 from the point coordinator and waits to be polled by the point coordinator. Of the stations, MIMO stations interpret the MIMO CP parameter set contained in the management frame received from the point coordinator and set their network allocation vector (NAV) values using only the CFP 510. However, since SISO stations cannot interpret the MIMO CP parameter set by themselves, they spend more time than the MIMO stations in setting their NAV values. In other words, the SISO stations set their NAV values using the entire maximum CFP 540. The stations secure a channel in a predetermined order using the PCF method described above with reference to FIG. 1 while setting their NAV values.

In operation S 130, the CFP 510 ends, and the MIMO contention period 520 begins. Specifically, when the transmission of data from the station that has been most recently polled by the point coordinator during CFP 510 is complete, the MIMO stations contend with each other for the channel. For example, when a distributed inter-frame space (DIFS) period following the CFP 510 ends, a contention window having a predetermined size is set for each of the MIMO stations. Random slots (i.e., back-off time) having the same probability of being selected through a back-off algorithm are respectively allotted to the MIMO stations that participate in the contention for the channel.

The MIMO station having minimum back-off time secures the channel and transmits a frame using the channel ahead of the rest of the MIMO stations. In the same way, the rest of the MIMO stations secure the channel in the order determined through the back-off algorithm. The order in which the MIMO stations secure the channel may be determined using a DCF method, as described above with reference to FIG. 2.

However, since the SISO stations are not able to interpret by themselves the MIMO CP parameter set contained in the management frame transmitted from the point coordinator, they can secure the channel only when they are polled by the point coordinator even during the MIMO contention period.

The MIMO contention period 520 ends along with the maximum CFP 540. For example, when the point coordinator transmits a CFP end frame following the IEEE 802.11 standard, the maximum CFP 540 including the MIMO contention period 520 e nds, and the contention period 530 begins in operation S 140. During the contention period 530, the SISO stations contend for the channel. This type of contention-based channel securing method may be performed using the back-off algorithm described above with reference to FIG. 2. During the contention period 530, the MIMO stations participate in the contention for the channel along with the SISO stations.

### Industrial Applicability

As described above, according to the present invention, it is possible to prevent collision of frames transmitted from MIMO stations and from conventional stations based on the IEEE 802.11a standard in a wireless infrastructure network.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom. Therefore, the described embodiments are to be considered in all respects only as illustrative and not restrictive and the scope of the invention.

## Claims

1. A wireless communication method comprising:
generating a management frame that comprises information on a multi input multi output, MIMO, contention period during which MIMO stations contend with each other for a channel, wherein the management frame further comprises information on a maximum contention free period, CFP, during which single input single output, SISO, stations secure the channel when polled by a point coordinator without the need to contend with each other, and wherein the MIMO contention period is included in the maximum CFP; and
transmitting the management frame.

2. A wireless communication method comprising:
receiving a management frame that comprises information on a MIMO contention period during which MIMO stations contend with each other for a channel, wherein the management frame further comprises information on a maximum contention free period, CFP, during which single input single output, SISO, stations secure the channel when polled by a point coordinator without the need to contend with each other, and wherein the MIMO contention period is included in the maximum CFP; and
allowing the MIMO stations to contend with each other for the channel during the MIMO contention period specified in the management frame.

3. The wireless communication method of claim 1 or 2, wherein the MIMO stations contend with each other for the channel using a back-off algorithm.

4. The wireless communication method of claim 1, 2, or 3, wherein the management frame is a beacon frame.

5. The wireless communication method of claim 4, wherein the beacon frame complies with the IEEE 802.11 standard.

6. The wireless communication method of any one of the preceding claims, wherein the information on the MIMO contention period comprises an element ID field, which specifies elements of the information on the MIMO contention period, a MIMO contention period field, which specifies the duration of the MIMO contention period, and a length field, which specifies the size of the MIMO contention period field.

7. The wireless communication method of claim 6, wherein the MIMO contention period ends along with the maximum CFP.

8. The wireless communication method of claim 7 further comprising transmitting SISO data by securing the channel through contention when the MIMO contention period ends.

9. A point coordinator for a wireless communication system, the point coordinator being arranged to generate a management frame that comprises information on a multi input multi output, MIMO, contention period during which MIMO stations contend with each other for a channel, wherein the management frame further comprises information on a maximum contention free period, CFP, during which single input single output, SISO, stations secure the channel when polled by the point coordinator without the need to contend with each other, and wherein the MIMO contention period is included in the maximum CFP;
wherein the point coordinator is arranged to transmit the management frame.

10. A wireless communication system, the wireless communication system comprising:
a point coordinator according to claim 9;
wherein the stations that have received the management frame from the point coordinator are arranged to communicate by referring to the information on the contention period contained in the management frame.

11. The wireless communication system of claim 10, wherein the management frame is a beacon frame.

12. The wireless communication system of claim 11, wherein the MIMO stations are arranged to contend with each other to secure the channel during the set contention period.

13. The wireless communication system of claim 10, 11 or 12, wherein the information on the MIMO contention period comprises an element ID field, which specifies elements of the information on the MIMO contention period, a MIMO contention period field, which specifies the duration of the MIMO contention period, and a length field, which specifies the size of the MIMO contention period field.

14. The wireless communication system of any one of claims 10 to 13, wherein the MIMO contention period ends along with the maximum CFP.

15. The wireless communication system of any one of claims 10 to 13, wherein the MIMO contention period and the maximum CFP end when the point coordinator transmits a CFP end frame.

16. The wireless communication system of claim 15, wherein the MIMO stations having received the CFP end frame are arranged to contend with each other for the channel.

17. The wireless communication system of any one of claims 10 to 16, wherein SISO data is arranged to be transmitted by securing the channel through contention when the MIMO contention period ends.

## Patentansprüche

1. Funkkommunikationsverfahren, umfassend:
Erzeugen eines Management-Rahmens, der Informationen über eine Mehrgrößen-(MIMO)-Wettbewerbsperiode aufweist, während der MIMO-Stationen miteinander im Wettbewerb um einen Kanal stehen, wobei der Management-Rahmen ferner Informationen über eine maximale wettbewerbsfreie Periode, CFP, aufweist, während der Eingrößen-(SISO)-Stationen den Kanal bei Aufruf durch einen Punktkoordinator sichern, ohne miteinander in Wettbewerb stehen zu müssen, und wobei die MIMO-Wettbewerbsperiode in der maximalen CFP eingeschlossen ist, und
Übertragen des Management-Rahmens.

2. Funkkommunikationsverfahren, umfassend:
Empfangen eines Management-Rahmens, der Informationen über eine MIMO-Wettbewerbsperiode aufweist, während der MIMO-Stationen miteinander im Wettbewerb um einen Kanal stehen, wobei der Management-Rahmen ferner Informationen über eine maximale wettbewerbsfreie Periode, CFP, aufweist, während der Eingrößen-(SISO)-Stationen den Kanal bei Aufruf durch einen Punktkoordinator sichern, ohne miteinander in Wettbewerb stehen zu müssen, und wobei die MIMO-Wettbewerbsperiode in der maximalen CFP eingeschlossen ist, und
Zulassen des Wettbewerbs von MIMO-Stationen miteinander um den Kanal während der im Management-Rahmen angegebenen MIMO-Wettbewerbsperiode.

3. Funkkommunikationsverfahren nach Anspruch 1 oder 2, wobei die MIMO-Stationen unter Verwendung eines Backoff-Algorithmus miteinander im Wettbewerb um den Kanal stehen.

4. Funkkommunikationsverfahren nach Anspruch 1, 2 oder 3, wobei der Management-Rahmen ein Signal-Rahmen ist.

5. Funkkommunikationsverfahren nach Anspruch 4, wobei der Signal-Rahmen dem IEEE 802.11 Standard entspricht.

6. Funkkommunikationsverfahren nach einem der vorhergehenden Ansprüche, wobei die Informationen über die MIMO-Wettbewerbsperiode ein Elementkennungsfeld, das Elemente der Informationen über die MIMO-Wettbewerbsperiode angibt, ein MIMO-Wettbewerbsperiode-Feld, das die Dauer der MIMO-Wettbewerbsperiode angibt, und ein Längenfeld, das die Größe des MIMO-Wettbewerbsperiode-Felds angibt, aufweisen.

7. Funkkommunikationsverfahren nach Anspruch 6, wobei die MIMO-Wettbewerbsperiode zusammen mit der maximalen CFP endet.

8. Funkkommunikationsverfahren nach Anspruch 7, das ferner das Übertragen von SISO-Daten durch Sichern des Kanals durch Wettbewerb, wenn die MIMO-Wettbewerbsperiode endet, aufweist.

9. Punktkoordinator für ein Funkkommunikationssystem, wobei der Punktkoordinator zum Erzeugen eines Management-Rahmens angeordnet ist, der Informationen über eine Mehrgrößen- (MIMO)-Wettbewerbsperiode aufweist, während der MIMO-Stationen miteinander im Wettbewerb um einen Kanal stehen, wobei der Management-Rahmen ferner Informationen über eine maximale wettbewerbsfreie Periode, CFP, aufweist, während der Eingrößen-(SISO)-Stationen den Kanal bei Aufruf durch den Punktkoordinator sichern, ohne miteinander in Wettbewerb stehen zu müssen, und wobei die MIMO-Wettbewerbsperiode in der maximalen CFP eingeschlossen ist, und
wobei der Punktkoordinator zum Übertragen des Management-Rahmens angeordnet ist.

10. Funkkommunikationssystem, wobei das Funkkommunikationssystem Folgendes aufweist:
einen Punktkoordinator nach Anspruch 9,
wobei die Stationen, die den Management-Rahmen von dem Punktkoordinator empfangen haben, angeordnet sind, um durch Bezugnahme auf die Informationen über die in dem Management-Rahmen enthaltene Wettbewerbsperiode zu kommunizieren.

11. Funkkommunikationssystem nach Anspruch 10, wobei der Management-Rahmen ein Signal-Rahmen ist.

12. Funkkommunikationsverfahren nach Anspruch 11, wobei die MIMO-Stationen angeordnet sind, um während der festgesetzten Wettbewerbsperiode zur Sicherung des Kanals miteinander in Wettbewerb zu stehen.

13. Funkkommunikationssystem nach Anspruch 10, 11 oder 12, wobei die Informationen über die MIMO-Wettbewerbsperiode ein Elementkennungsfeld, das Elemente der Informationen über die MIMO-Wettbewerbsperiode angibt, ein MIMO-Wettbewerbsperiode-Feld, das die Dauer der MIMO-Wettbewerbsperiode angibt, und ein Längenfeld, das die Größe des MIMO-Wettbewerbsperiode-Felds angibt, aufweisen.

14. Funkkommunikationssystem nach einem der Ansprüche 10 bis 13, wobei die MIMO-Wettbewerbsperiode zusammen mit der maximalen CFP endet.

15. Funkkommunikationssystem nach einem der Ansprüche 10 bis 13, wobei die MIMO-Wettbewerbsperiode und die maximale CFP enden, wenn der Punktkoordinator einen CFP-Ende-Rahmen überträgt.

16. Funkkommunikationssystem nach Anspruch 15, wobei die MIMO-Stationen nach Empfang des CFP-Ende-Rahmens angeordnet sind, um miteinander im Wettbewerb um den Kanal zu stehen.

17. Funkkommunikationssystem nach einem der Ansprüche 10 bis 16, wobei SISO-Daten angeordnet sind, um übertragen zu werden, indem der Kanal mittels Wettbewerb gesichert wird, wenn die MIMO-Wettbewerbsperiode endet.

## Revendications

1. Procédé de communication sans fil comprenant :
la génération d'une trame de gestion qui comprend des informations sur une période de conflit entrées multiples, sorties multiples, MIMO, pendant laquelle des stations MIMO entrent en conflit l'une avec l'autre à propos d'un canal, cette trame de gestion comprenant en outre des informations sur une période sans conflit, CFP, maximum, pendant laquelle des stations simple entrée, simple sortie, SISO, obtiennent le canal lorsqu'elles sont interrogées par un coordinateur de points sans avoir besoin d'entrer en conflit l'une avec l'autre, et la période de conflit MIMO étant comprise dans la période CFP maximum ; et
la transmission de cette trame de gestion.

2. Procédé de communication sans fil comprenant :
la réception d'une trame de gestion qui comprend des informations sur une période de conflit MIMO pendant laquelle des stations MIMO entrent en conflit l'une avec l'autre à propos d'un canal, cette trame de gestion comprenant en outre des informations sur une période sans conflit, CFP, maximum, pendant laquelle des stations simple entrée, simple sortie, SISO, obtiennent le canal lorsqu'elles sont interrogées par un coordinateur de points sans avoir besoin d'entrer en conflit l'une avec l'autre, et la période de conflit MIMO étant comprise dans la période CFP maximum ; et
l'autorisation aux stations MIMO d'entrer en conflit l'une avec l'autre à propos du canal pendant la période de conflit MIMO spécifiée dans la trame de gestion.

3. Procédé de communication sans fil selon la revendication 1 ou 2, dans lequel les stations MIMO entrent en conflit l'une avec l'autre à propos du canal en utilisant un algorithme d'attente.

4. Procédé de communication sans fil selon la revendication 1, 2 ou 3, dans lequel la trame de gestion est une trame de signalisation d'erreurs.

5. Procédé de communication sans fil selon la revendication 4, dans lequel la trame de signalisation d'erreurs est conforme à la norme IEEE 802.11.

6. Procédé de communication sans fil selon l'une quelconque des revendications précédentes, dans lequel les informations sur la période de conflit MIMO comprennent un champ d'identité d'éléments, qui spécifie des éléments des informations sur la période de conflit MIMO, un champ de période de conflit MIMO, qui spécifie la durée de la période de conflit MIMO, et un champ de longueur, qui spécifie la taille du champ de la période de conflit MIMO.

7. Procédé de communication sans fil selon la revendication 6, dans lequel la période de conflit MIMO se termine avec la période CFP maximum.

8. Procédé de communication sans fil selon la revendication 7, comprenant en outre la transmission de données SISO en obtenant le canal par conflit lorsque la période de conflit MIMO se termine.

9. Coordinateur de points pour un système de communication sans fil, ce coordinateur de points étant agencé de façon à générer une trame de gestion qui comprend des informations sur une période de conflit entrées multiples, sorties multiples, MIMO, pendant laquelle des stations MIMO entrent en conflit l'une avec l'autre à propos d'un canal, cette trame de gestion comprenant en outre des informations sur une période sans conflit, CFP, maximum, pendant laquelle des stations simple entrée, simple sortie, SISO, obtiennent le canal lorsqu'elles sont interrogées par le coordinateur de points sans avoir besoin d'entrer en conflit l'une avec l'autre, et la période de conflit MIMO étant comprise dans la période CFP maximum ;
ce coordinateur de points étant agencé de façon à transmettre la trame de gestion.

10. Système de communication sans fil, ce système de communication sans fil comprenant :
un coordinateur de points selon la revendication 9 ;
dans lequel les stations qui ont reçu la trame de gestion du coordinateur de points sont agencées de façon à communiquer en se reportant aux informations sur la période de conflit contenues dans la trame de gestion.

11. Système de communication sans fil selon la revendication 10, dans lequel la trame de gestion est une trame de signalisation d'erreurs.

12. Système de communication sans fil selon la revendication 11, dans lequel les stations MIMO sont agencées de façon à entrer en conflit l'une avec l'autre de façon à obtenir le canal pendant le période de conflit déterminée.

13. Système de communication sans fil selon la revendication 10, 11 ou 12, dans lequel les informations sur la période de conflit MIMO comprennent un champ d'identité d'éléments, qui spécifie des éléments des informations sur la période de conflit MIMO, un champ de période de conflit MIMO, qui spécifie la durée de la période de conflit MIMO, et un champ de longueur, qui spécifie la taille du champ de la période de conflit MIMO.

14. Système de communication sans fil selon l'une quelconque des revendications 10 à 13, dans lequel la période de conflit MIMO se termine avec la période CFP maximum.

15. Système de communication sans fil selon l'une quelconque des revendications 10 à 13, dans lequel la période de conflit MIMO et la période CFP maximum se terminent lorsque le coordinateur de points transmet une trame de fin de CFP.

16. Système de communication sans fil selon la revendication 15, dans lequel les stations MIMO ayant reçu la trame de fin de CFP sont agencées de façon à entrer en conflit l'une avec l'autre à propos du canal.

17. Système de communication sans fil selon l'une quelconque des revendications 10 à 16, dans lequel les données SISO sont agencées de façon à être transmises en obtenant le canal par conflit lorsque la période de conflit MIMO se termine.
